# FASCICULE DE BREVET EUROPEEN

(11) **EP 2 364 899 B1**
(45) Date de publication et mention de la délivrance du brevet: **06.05.2015**
(21) Numéro de dépôt: 11290119.4
(22) Date de dépôt: 09.03.2011
(51) Int. Cl.: B62D 55/21, B62D 55/20

(54) **Chenille pour véhicule tout terrain**
Raupe für Geländegängiges Fahrzeug
Caterpiller track for all terrain vehicle

(30) Priorité: 10.03.2010 FR 1000964
(43) Date de publication de la demande: 14.09.2011
(73) Titulaire: NEXTER Systems, 42328 Roanne Cedex (FR)
(72) Inventeur: Bonnetain Frédéric, 18023 Bourges (FR); Gendry Yann, 18023 Bourges (FR)
(74) Mandataire: Célanie, Christian

(56) Documents cités:
- EP-A2- 1 897 791
- FR-A- 1 217 147
- GB-A- 191 021 832
- US-A- 1 724 961
- US-A- 2 335 228
- US-A1- 2002 021 047

## Description

Le domaine technique de l'invention est celui des chenilles pour véhicules tout terrain et en particulier pour véhicules blindés.

De telles chenilles sont bien connues de l'Homme du Métier. Elles sont constituées de l'assemblage de maillons, articulés les uns aux autres, et formant une chaîne fermée qui s'enroule sur des couronnes dentées reliées à la motorisation du véhicule.

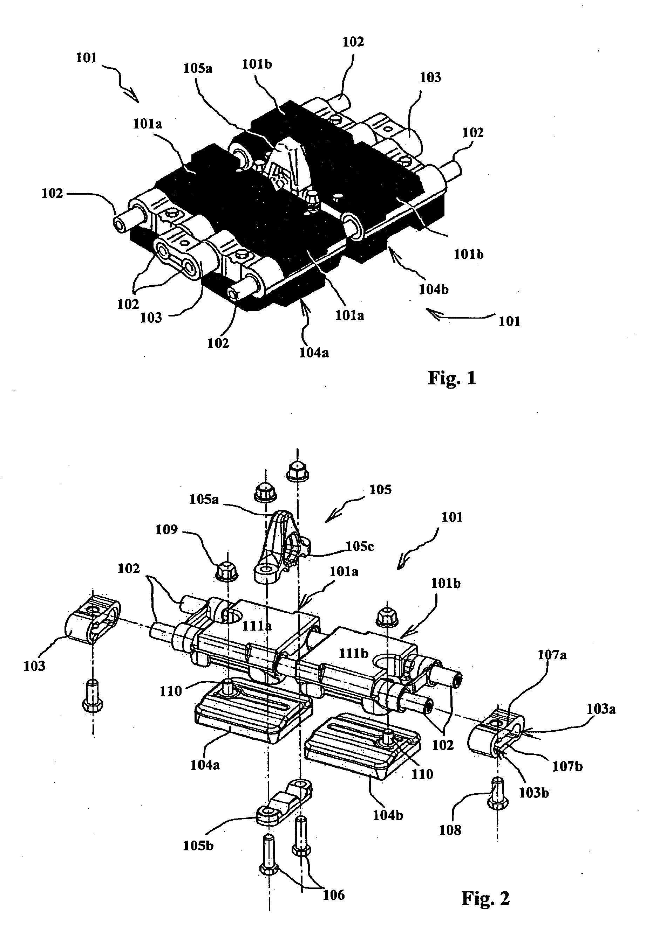

La figure 1 montre ainsi un assemblage de deux maillons d'une chenille selon l'art antérieur. La figure 2 montre un maillon d'une telle chenille en vue éclatée.

Les parties représentées en noir sur la figure 1 sont réalisées en caoutchouc.

On voit sur la figure 1 que les maillons 101 ne sont pas liés directement les uns aux autres. Ils sont rendus solidaires par l'intermédiaire d'axes 102 et de connecteurs 103.

Ainsi, chaque maillon 101 comporte deux perçages parallèles qui reçoivent chacun un axe 102. Le maillon est par ailleurs formé de deux corps 101a et 101b identiques. Chaque maillon 101 est fixé à un autre maillon au moyen de connecteurs 103 qui relient deux axes 102 de deux maillons voisins. La figure 1 montre un tel assemblage.

Les extrémités des axes 102 sont en effet en saillie au niveau des rebords externes des maillons 101 ce qui permet de fixer les connecteurs 103. Chaque maillon 101 est ainsi fixé à un maillon voisin par deux connecteurs d'extrémité 103.

Chaque maillon 101 est aussi fixé au maillon voisin par un connecteur central 105. Ce connecteur central comporte deux brides 105b et 105c fixées par des vis 106 et il porte un prolongement 105a qui joue le rôle de dent de guidage pour la chenille.

D'une façon classique (figure 2) les connecteurs d'extrémité 103 comprennent deux trous cylindriques 103a, 103b, destinés à coiffer les axes 102, et reliés par des languettes 107a, 107b. Une vis 108 traverse les languettes 107a, 107b et coopère avec un taraudage aménagé dans une des languettes. Le serrage de cette vis permet de rapprocher élastiquement les languettes 107a, 107b l'une de l'autre ce qui provoque un serrage du connecteur 103 sur les axes 102.

Le connecteur 103 et les extrémités des axes 102 pourront être pourvus d'un ou plusieurs méplats (non représentés). Une telle disposition assurera un positionnement relatif des maillons donnant une flexion (précontrainte) préalable entre maillons successifs. On facilitera ainsi l'enroulement des chenilles sur le barbotin, la poulie de tension et les galets extrêmes du train de roulement.

D'une façon classique chaque axe 102 comporte deux couronnes d'un revêtement d'un matériau synthétique (non visible sur les figures) qui coopèrent avec les alésages aménagés dans les corps 101a, 101b.

Ces couronnes sont réalisées le plus souvent en caoutchouc, soit d'un seul bloc par surmoulage soit par enfilage de différents anneaux concentriques collés les uns aux autres (anneaux dénommés adhérites).

En s'interposant entre l'axe 102 et les corps 101a, 101b du maillon 101, ces couronnes permettent d'absorber une partie des contraintes mécaniques reçues des maillons. Elles permettent d'éviter également les frottements métal sur métal entre l'axe 102 et le maillon 101 lors du fonctionnement de la chenille. En effet de tels frottements conduiraient à une usure prématurée des axes ce qui entraînerait des ruptures.

Par ailleurs le caoutchouc de ces couronnes permet d'autoriser des déformations différentes pour les axes 102 d'un maillon à l'autre lors du fonctionnement de la chenille. Les couronnes ne doivent donc pas glisser lors du fonctionnement et elles supportent par leur déformation les torsions relatives des axes 102 par rapport aux maillons 101.

Chaque corps 101a, 101b de maillon comporte également une semelle 104a, 104b formée d'une embase métallique recouverte d'un matériau synthétique. Cette semelle est destinée à venir en contact avec le sol. Elle est fixée au corps par les écrous 109 qui coopèrent avec les tiges filetées 110 solidaires des embases (figure 2).

Chaque corps 101a, 101b enfin porte sur sa face supérieure une couche 111a, 111b d'un matériau synthétique. Cette couche sert de chemin de roulement pour les galets qui guident la chenille.

D'un point de vue fonctionnel, la chenille est entraînée par la rotation de deux couronnes dentées (non représentées) dont les dents engrènent, de part et d'autre des maillons, entre les connecteurs 103. Le guidage latéral de la chenille est assuré par les dents guide 105a qui circulent dans des gorges des galets de guidage (non représentés).

Le démontage ou le montage d'un maillon se fait par le retrait ou la remise en place des connecteurs 103 qui lient un maillon 101 à ses deux voisins.

Une telle chenille bien connue présente des inconvénients.

On note tout d'abord qu'elle est formée d'un assez grand nombre de pièces. Le montage et le démontage des maillons sont par ailleurs compliqués.

En effet, il est nécessaire d'apporter une précontrainte aux axes 102 lors du montage. Cette précontrainte est délicate à assurer sur le terrain lorsque l'équipage ne dispose pas des outillages spécifiques. Les montages ou démontages fréquents entraînent une usure des connecteurs 103 qui constituent un point fragile des chenilles.

La surface de contact des semelles avec le sol est relativement réduite, il en résulte une usure relativement rapide de ces semelles qui par ailleurs arrivent en contact avec le sol de façon brutale, maillon après maillon.

Enfin, avec de tels maillons, il n'est pas possible d'obtenir un entraxe constant entre les axes 102 des maillons. En effet, les axes 102 sont disposés relativement proches des bords avant et arrière de chaque maillon 101, cela afin de faciliter la mise en place des connecteurs 103 et l'espace entre deux axes d'un même maillon doit être suffisamment large pour permettre le passage de la dent de la couronne d'entraînement. Il résulte de ces entraxes non constants un enroulement de la chenille qui se fait par à-coup et des vibrations importantes qui se communiquent au sol et au véhicule.

Le brevet US-2335288 décrit également une chenille pour véhicule comprenant une rangée de corps médians 11 disposée entre deux rangées de corps latéraux 10. Un décalage longitudinal existe entre la rangée de corps médians et les rangées de corps latéraux. Les différents corps sont articulés par les axes 12, 13 parallèles entre eux.

Enfin, avec de tels maillons, il n'est pas possible d'obtenir un entraxe constant entre les axes 102 des maillons. En effet, les axes 102 sont disposés relativement proches des bords avant et arrière de chaque maillon 101, cela afin de faciliter la mise en place des connecteurs 103 et l'espace entre deux axes d'un même maillon doit être suffisamment large pour permettre le passage de la dent de la couronne d'entraînement. Il résulte de ces entraxes non constants un enroulement de la chenille qui se fait par a-coup et des vibrations importantes qui se communiquent au sol et au véhicule.

L'invention a pour but de proposer un nouveau concept de chenille qui permet de pallier de tels inconvénients et notamment une chenille dont la surface de contact avec le sol par unité de longueur est augmentée, ce qui réduit l'usure des semelles.

La chenille selon l'invention est de conception simple et comporte moins de pièces que les chenilles connues. Elle peut être assemblée et démontée sur le terrain sans outillages spécifiques.

Enfin, la chenille selon l'invention présente des entraxes constant ce qui assure un enroulement régulier sur les couronnes d'entraînement, diminuant ainsi notablement le bruit et les vibrations.

Ainsi, l'invention a pour objet une chenille pour véhicule tout terrain, et notamment pour véhicule blindé, comprenant des maillons articulés les uns aux autres de façon à former une chaîne fermée, chaque maillon portant au moins un corps doté d'une semelle destinée à venir en contact avec le sol, chenille comportant une rangée de corps médians qui est disposée avec un décalage longitudinal par rapport aux rangées de corps latéraux, chaque corps médian se trouvant ainsi placé en quinconce entre quatre corps latéraux, chaque corps médian étant par ailleurs articulé, par l'intermédiaire d'au moins deux axes parallèles, avec quatre corps latéraux, c'est à dire deux corps latéraux au niveau de chaque rangée latérale, les axes étant disposés à égale distance les uns des autres, caractérisée en ce que chaque corps médian est formé de deux demi-corps qui sont assemblés l'un à l'autre par un moyen de liaison et qui sont coiffés par une semelle commune, les deux demi-corps comportant chacun une languette munie de dentures, les dentures d'une languette coopérant avec celles de l'autre languette après assemblage pour assurer une liaison en traction longitudinale des deux demi-corps, des vis de fixation assurant par ailleurs la solidarisation des deux demi-corps.

Selon un mode particulier de réalisation, les corps médians ont une forme globalement hexagonale, les corps latéraux ayant des profils correspondant avec ceux des corps médians en regard desquels ils se positionnent.

Les corps médians ont une forme d'hexagone régulier.

Selon une caractéristique de l'invention, les corps médians ont une forme d'hexagone non régulier, les profils de deux corps latéraux voisins formant un angle supérieur à 120°.

Selon une autre caractéristique de l'invention, chaque demi-corps porte une dent guide médiane solidaire de la face opposée à celle destinée à recevoir la semelle (29).

Selon encore une autre caractéristique, chaque corps médian est articulé avec les corps latéraux par l'intermédiaire de deux axes parallèles, chaque axe comportant une partie médiane couverte d'au moins une couche d'un matériau élastique et qui est solidaire du corps médian.

Selon encore une autre caractéristique, l'extrémité de chaque axe est rendue solidaire d'un corps latéral par encastrement.

Chaque maillon de la chenille pourra être constitué par deux corps latéraux et deux demi-corps médians, chaque demi-corps médian étant rendu solidaire des deux corps latéraux par un axe différent, chaque demi-corps médian constituant la moitié d'un corps médian différent.

L'invention sera mieux comprise à la lecture de la description qui va suivre d'un mode particulier de réalisation, description faite en référence aux dessins annexés et dans les quels :
- la figure 1 montre un assemblage de deux maillons d'une chenille selon l'art antérieur,
- la figure 2 montre en vue éclatée les composants d'un maillon de chenille selon l'art antérieur,
- la figure 3a est une vue de dessus d'un tronçon de chenille selon l'invention,
- la figure 3b est une vue de dessous du même tronçon de chenille,
- la figure 3c est une vue latérale de ce tronçon de chenille,
- la figure 4 est une vue en perspective d'un pseudo maillon de la chenille selon l'invention,
- la figure 5 est une vue en perspective d'un axe seul,
- la figure 6 est une vue en perspective d'un corps médian seul,
- les figures 7a et 7b sont deux vues en perspective d'un corps latéral seul,
- la figure 8 est une vue en perspective d'un premier demi-corps médian,
- les figures 9a et 9b sont deux vues en perspective (vue de dessus et vue de dessous) d'un deuxième demi-corps médian destiné à être assemblé au premier demi corps-médian,
- les figures 10a et 10b sont deux vues en perspective d'un maillon de la chenille selon l'invention, la figure 10a étant une vue de dessus et la figure 10b une vue de dessous,
- la figure 11 est une vue éclatée schématisant l'assemblage des maillons et la fixation de la semelle des corps médians,
- les figures 12a et 12b sont deux vues d'un maillon de la chenille selon l'invention la figure 12a étant une vue de dessus et la figure 12b une vue de dessous,
- la figure 13 est une vue latérale montrant l'entraînement d'une chenille selon l'invention par une couronne dentée solidaire d'une motorisation de véhicule,
- les figures 14a et 14b sont des vues analogues respectivement aux figures 3a et 3b et montrent de dessus (figure 14a) et de dessous (figure 14b) un tronçon de chenille selon une variante de l'invention,
- la figure 15a montre en perspective et de façon éclatée un pseudo maillon d'une chenille selon cette variante de réalisation,
- la figure 15b montre en perspective et de façon éclatée un maillon d'une chenille selon cette variante de réalisation, et
- la figure 16 montre en perspective et de dessus deux maillons assemblés d'une chenille selon cette variante de réalisation.

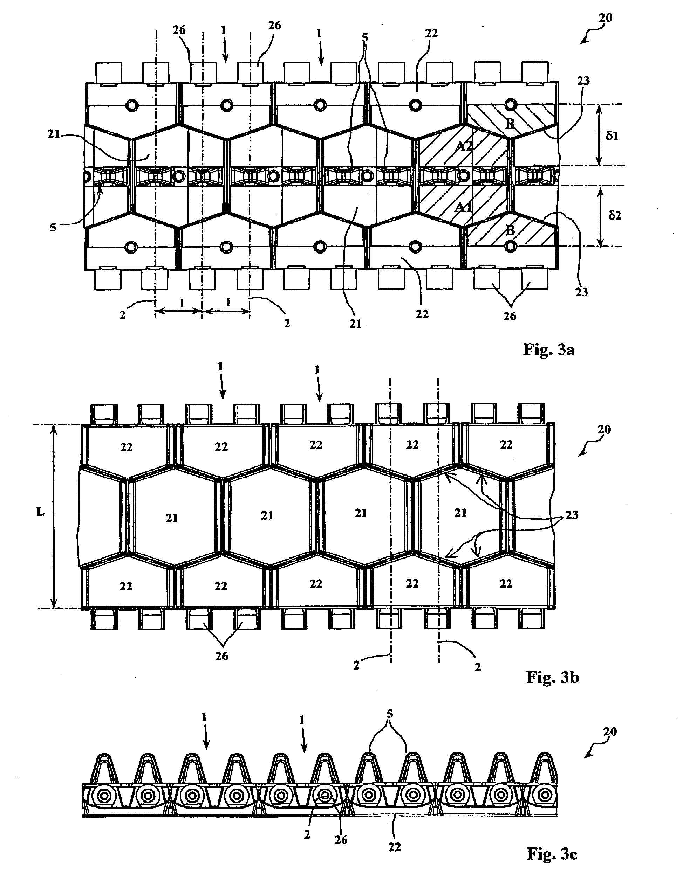

En se reportant aux figures 3a à 3c, une chenille 20 selon l'invention est formée par l'assemblage de maillons 1 qui sont articulés les uns aux autres de façon à former une chaîne fermée.

On voit plus particulièrement sur la figure 3b qui est une vue de dessous (donc de la face de la chenille qui est en contact avec le sol) que la chenille 20 comprend plusieurs corps dotés chacun d'une semelle destinée à venir en contact avec le sol. La chenille 20 comporte ainsi une rangée de corps médians 21 et deux rangées de corps latéraux 22.

La rangée de corps médians 21 est disposée avec un décalage longitudinal par rapport aux rangées de corps latéraux 22. Chaque corps médian 21 se trouve ainsi placé en quinconce entre quatre corps latéraux 22.

On remarque sur les figures 3a et 3b que les corps médians 21 ont une forme globalement hexagonale, les corps latéraux 22 ont par ailleurs des profils 23 qui correspondent avec ceux des corps médians en regard desquels ils se positionnent. On limite ainsi l'espace entre corps médians et corps latéraux. Une telle disposition permet d'obtenir une surface de semelle en contact avec le sol qui est optimale, en effet les semelles couvrent ainsi sensiblement toute la largeur L de la chenille.

On pourra comparer cette configuration avec celle des chenilles connues décrites précédemment en référence aux figures 1 et 2 et pour lesquelles les semelles 4a, 4b ne couvrent que les largeurs des corps de maillon 101a, 101b et ne couvrent pas en particulier l'espace en regard du connecteur médian 105.

Chaque corps médian 21 est par ailleurs articulé par l'intermédiaire d'au moins deux axes 2 (seul les axes géométriques sont visibles sur les figures 3a et 3b) avec quatre corps latéraux 22, c'est à dire deux corps latéraux 22 au niveau de chaque rangée latérale.

On remarque aussi sur les figures 3a à 3c que les axes 2 sont tous espacés du même entraxe 1.

La figure 3a qui montre une vue de dessus de la chenille 20 permet de visualiser les dents de guidage médian 5. Chaque corps médian 21 porte deux dents de guidage 5. La figure 3c permet, elle aussi, de visualiser les dents de guidage qui sont équidistantes les unes des autres.

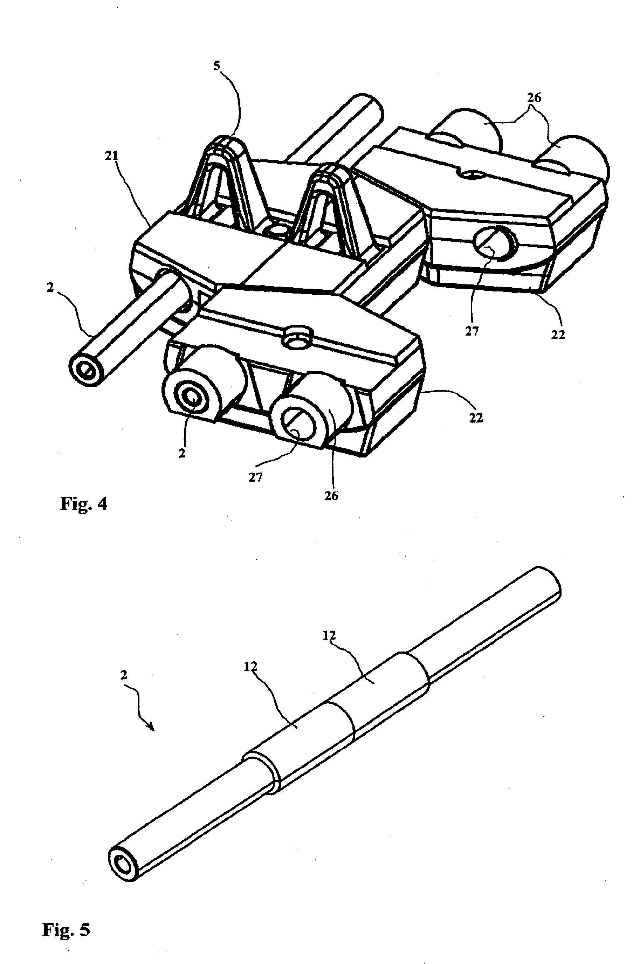

Les axes 2 permettent au corps médian 21 de pivoter par rapport aux corps latéraux 22. La figure 5 montre un axe 2 représenté seul. Un tel axe est réalisé en acier et il comporte au niveau de sa partie médiane une ou plusieurs couches 12 d'un matériau élastique (couches dénommées adhérites). Ce matériau pourra être du caoutchouc. Cette couche 12 de matériau élastique est solidaire du corps médian 21. Chaque extrémité de chaque axe 2 est par ailleurs rendue solidaire d'un corps latéral 22 par encastrement. Ceci signifie que l'ajustement des extrémités de l'axe 2 est serré avec l'alésage qui les reçoit dans les corps latéraux 22.

On remarque sur les figures 3a et 3b que les corps latéraux 22 comportent deux tétons latéraux cylindriques 26 à l'intérieur desquels se trouvent les axes 2. Ces tétons sont destinés à coopérer avec les dents d'une couronne d'entraînement de la chenille comme cela sera précisé par la suite. Il y a deux couronnes d'entraînement parallèle l'une à l'autre, une de chaque côté de la chenille pour chaque rangée de corps latéraux, couronne coopérant avec les tétons 26 des corps latéraux 22.

Ainsi lors du fonctionnement de la chenille la ou les couches d'adhérites 12 autorisent le pivotement de chaque axe 2 par rapport au corps médian 21, donc le pivotement du corps médian 21 par rapport aux corps latéraux 22.

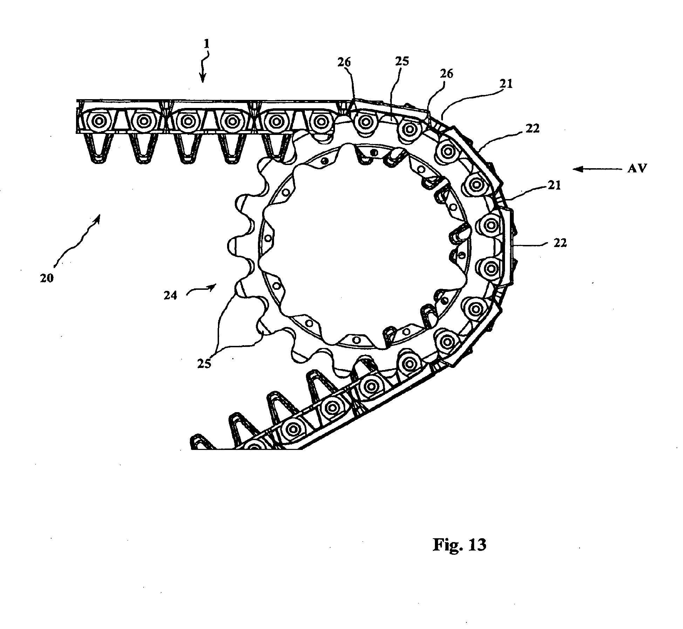

Ce pivotement se produit notamment lors du passage de la chenille sur une couronne dentée solidaire d'une motorisation de véhicule. La figure 13 montre la coopération de la chenille 20 avec une telle couronne dentée 24.

On remarque que les tétons 26 se positionnent entre les dents 25 de la couronne 24. L'entraxe constant assuré par l'invention permet par ailleurs d'obtenir une distance entre les axes relativement réduite, ceci autorise l'emploi d'une couronne 24 comportant un nombre de dents supérieur.

Ainsi, dans le cadre de l'application de l'invention à l'entraînement d'un véhicule blindé, il a été possible de mettre en oeuvre une couronne comportant 18 dents contre 12 dents pour les couronnes actuelles associées aux chenilles selon les figures 1 et 2. Il en résulte un entraînement plus progressif, une diminution des efforts, chocs, vibrations et de l'usure des dents, une fiabilité améliorée (déchenillage moins facile), une diminution des pertes énergétiques liées à l'entraînement. On a pu estimer que les pertes énergétiques liées au pivotement des axes étaient réduites de 35% avec la chenille selon l'invention par rapport à une chenille selon l'art antérieur (à masses et dimensions équivalentes).

On notera aussi que le contact chenille / denture de la couronne se fait au niveau des tétons 26 qui sont des parties robustes solidaires des corps latéraux 22. Avec les chenilles connues, le contact se fait entre les connecteurs ce qui provoque l'usure de ces derniers voire leur rupture. Par ailleurs la forme cylindrique des tétons 26 permet de favoriser la rotation entre les corps latéraux 22 et les couronnes 24, ce qui réduit l'usure en répartissant les efforts de frottement sur la surface cylindrique des tétons.

On remarque sur la figure 13, en avant (AV) de la couronne 24, les pivotements relatifs des corps médians 21 par rapport aux corps latéraux 22 lors du passage de la couronne 24. Ces pivotements sont relativement réduits angulairement ce qui contribue encore à la robustesse de la chenille car la couche d'adhérite 12 portée par les axes est peu sollicitée.

On a remarqué à la figure 3a que chaque corps médian 21 portait deux dents de guidage 5. Le nombre total des dents de guidage est accru avec l'invention ce qui augmente aussi la fiabilité de la chenille en réduisant les risques de déchenillage.

La face supérieure de la chenille 20 qui est visible figure 3a est celle qui sert également au guidage de la chenille sur des galets de roulement (non représentés). Pour recevoir les galets, les corps médian et latéraux portent une couche de matériau élastique (caoutchouc). La largeur de ces couches, donc des chemins de roulement pour les galets, est repérée par les flèches δ1 et δ2. On a hachuré sur la figure 3a des parties des corps 21 et 22 sur lesquelles est appliqué ce matériau élastique. Le corps médian 21 est couvert ainsi sur sensiblement toute sa surface, de part et d'autre des dents guide 5 (zones A1 et A2). Les corps latéraux 22 sont couverts sur les zones B qui s'étendent sensiblement sur la moitié de la largeur de ces corps à partir des profils 23.

Le choix de la forme hexagonale pour les corps médian 21 ainsi que la mise en place de profils 23 complémentaires de l'hexagone au niveau des corps latéraux permet d'adoucir le transfert des efforts des galets de roulement à la chenille lors du passage d'un corps à l'autre. On améliore ainsi le confort de roulage de la chenille tout en conservant la surface de contact au sol maximale.

La figure 4 montre l'assemblage d'un corps médian 21 avec deux corps latéraux 22. Ceci visualise ce que l'on peut qualifier de "pseudo maillon", il s'agit en effet du motif de base dont la répétition géométrique forme la chenille 20 complète. Ce motif ne correspond cependant pas au maillon réel proposé par l'invention pour des raisons de facilité de montage et de démontage.

Cette figure 4 permet cependant de visualiser un axe 2 qui est solidaire du corps médian 21. l'autre axe 2 qui est aussi solidaire du corps médian porte à chaque extrémité un corps latéral 22. On peut d'une certaine façon considérer qu'avec l'invention les corps latéraux jouent le rôle de "connecteurs" pour les différents corps médians 21.

Il est cependant clair qu'il n'est pas possible de fixer sur l'assemblage représenté à la figure 4 un autre corps médian 21 portant ses axes 2 sans démonter les corps latéraux 22.

En effet, d'un point de vue fabrication on a vu que les corps médians portaient les axes 2 qui en étaient rendus solidaires par les couches d'adhérites 12. Un tel montage ne peut se faire qu'en usine lors de la fabrication des corps médians 21.

Par ailleurs les axes 2 doivent être ajustés de façon serrée dans les alésages 27 des corps latéraux 22. Ceci permet en effet d'assurer le meilleur compromis entre une certaine raideur en traction qui est nécessaire au bon fonctionnement de la chenille et une certaine souplesse de pivotement qui permet de ne pas perdre trop d'énergie pour déformer la chenille au passage des couronnes dentées.

Un assemblage serré des axes 2 dans les alésages 27 se fera avantageusement par dilatation thermique différentielle, donc également en atelier.

Ces considérations amènent à modifier l'architecture de la chenille 20.

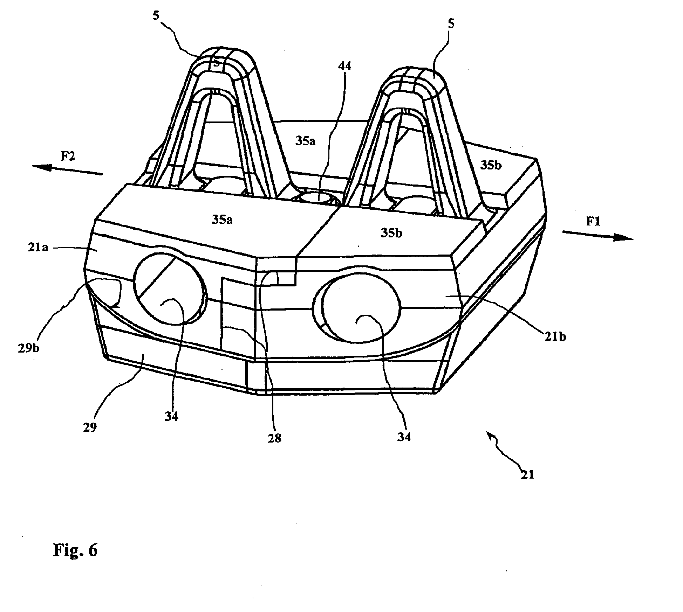

La figure 6 montre en perspective un corps médian 21, seul sans les axes 2. Ce corps est formé de deux demi-corps 21a et 21b dont l'interface de séparation est représentée par la ligne brisée 28.

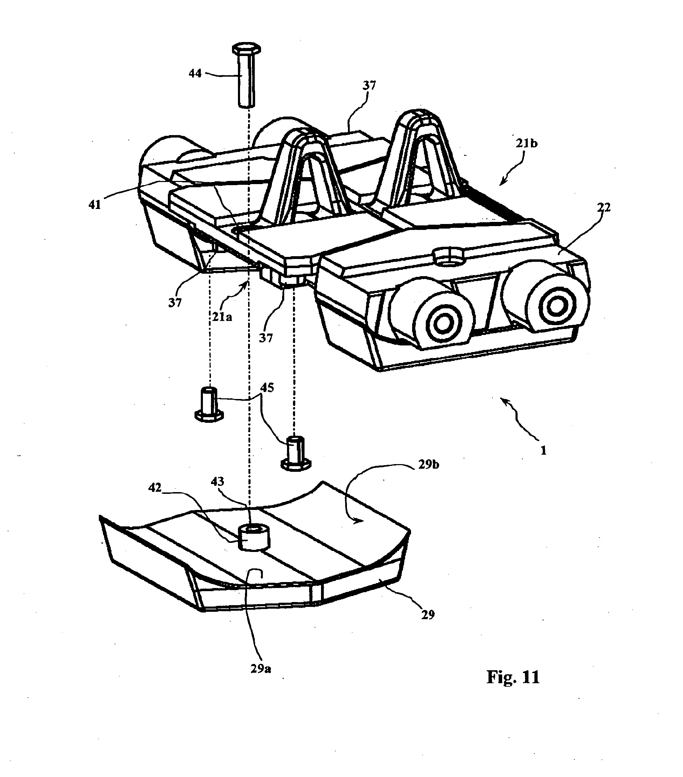

Ces deux demi-corps 21a et 21b sont assemblés l'un à l'autre par un moyen de liaison (non visible sur cette figure) et sont coiffés au niveau de leur face inférieure par une semelle commune 29. La semelle n'est pas représentée en détails, mais elle est visible à la figure 11. Comme dans les chenilles connues elle comporte une embase métallique 29a sur laquelle est fixé par vulcanisation une couche de caoutchouc. La semelle 29 a bien entendu un profil hexagonal et c'est elle qui est visible sur la figure 3b.

On notera par ailleurs que l'embase métallique 29a de la semelle a un profil incurvé 29b qui coopère avec un profil complémentaire du corps médian 21 (voir figures 6 et 11). Une telle disposition permet d'empêcher la rotation de la semelle 29 par rapport au corps médian 21 (et suivant l'axe de la vis 44 de fixation de l'embase 29 - voir figure 11). Elle permet également une transmission des efforts longitudinaux de la semelle 29 au corps médian 21.

Chaque demi-corps 21a,21b porte une dent guide médiane 5 qui est solidaire de la face opposée à celle destinée à recevoir la semelle 29. Chaque demi-corps porte également un alésage 34 destiné à recevoir un axe 2.

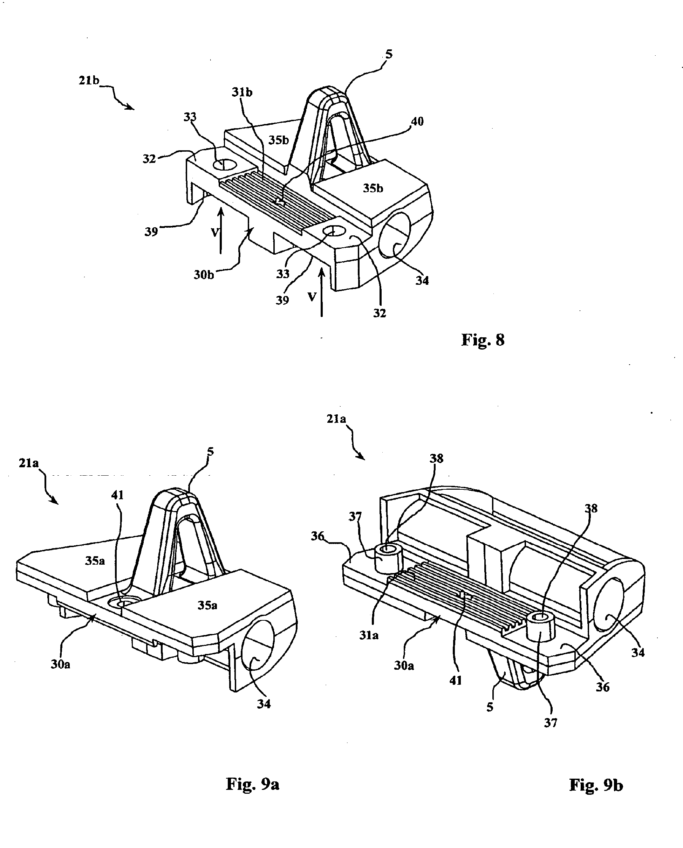

La figure 8 montre le demi-corps 21b seul et sans axe 2. On voit que ce demi-corps comporte une languette 30b qui est munie de dentures 31b au niveau de sa partie médiane. La zone couverte de dentures est délimitée au niveau des extrémités des dentures par deux plats 32 sur chacun desquels est aménagé un alésage 33. On remarque par ailleurs la dent de guidage 5 portée par la face supérieure de ce demi-corps 21b et l'alésage 34 qui est destiné à recevoir un axe 2.

La face supérieure de chaque demi-corps porte, de part et d'autre de chaque dent 5, une couche 35b de matériau élastique (caoutchouc). Comme cela a été décrit précédemment en référence à la figure 3a (zones A1 et A2), ces couches constituent les chemins de roulement pour les galets de guidage de la chenille.

Les dentures 31b de la languette 30b sont de profil rectangulaire en section. Ces dentures 31b sont destinées à coopérer, après l'assemblage des deux demi-corps, avec celles d'une languette 30a de l'autre demi-corps 21a pour assurer une liaison en traction longitudinale des deux demi-corps.

On entend par traction longitudinale une traction suivant les directions F1 et F2 représentées à la figure 6, directions perpendiculaires aux alésages 34. Cette traction est l'effort principal subi par la chenille lors de son fonctionnement.

Les figures 9a et 9b montrent, suivant deux vues symétriques l'une de l'autre, le demi-corps 21a seul et sans axe 2.

On remarque qu'il porte une languette 30a ainsi que des dentures 31a. On remarque plus particulièrement sur la figure 9b que la languette 30a comporte des plats 36, de part et d'autre des dentures 31a, plats sur chacun desquels est disposé un téton de centrage 37. Lors de l'assemblage des deux demi corps 21a et 21b, les tétons 37 du demi-corps 21a se logent dans les alésages 33 du demi-corps 21b ce qui permet de positionner correctement les dentures 31a par rapport aux dentures 31b.

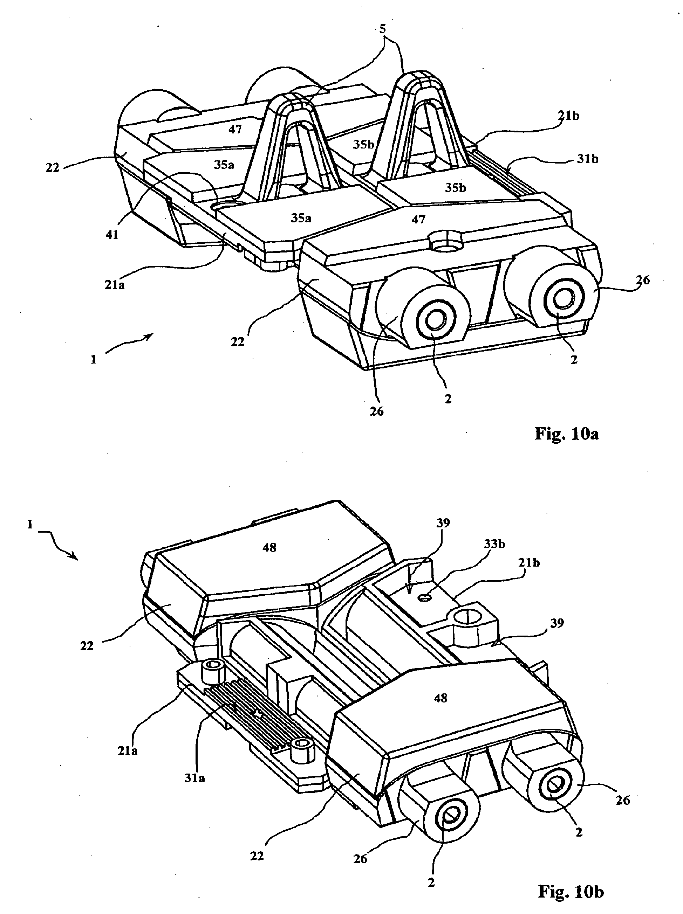

Lorsque l'assemblage est réalisé, les plats 36 sont en contact avec les plats 32. Les tétons 37 portent un taraudage axial 38 qui est destiné à recevoir une vis (non représentée sur cette figure, les vis 45 sont visibles figure 11) qui complète l'assemblage des deux demi-corps. La vis est introduite dans l'alésage 33 au niveau de la face inférieure du demi corps 21b. On a représenté sur la figure 8 par les flèches V les directions d'introduction des vis de fixation. Les têtes de ces vis se logeront dans les dégagements 39 et seront masquées par la semelle 29 une fois cette dernière fixée. On remarque à la figure 10b (qui montre la face inférieure du demi-corps 21b) que les alésages 33 se terminent par un trou 33b de diamètre plus réduit, cela afin de retenir la tête de la vis de fixation. Le moyen de liaison des deux demi-corps 21a et 21b est donc constitué par les deux vis 45 ainsi que par les dentures 31a et 31b.

On remarque enfin sur la figure 8 un trou 40 qui est disposé au niveau des dentures 31b. Ce trou vient en regard avec un trou complémentaire 41 porté par l'autre demi-corps 21a (figures 9a et 9b). Ces trous 40, 41 autorisent le passage d'une vis (non représentée sur cette figure, vis 44 qui est visible figure 11). Cette vis permet de fixer la semelle 29 une fois les deux demi corps assemblés.

La figure 11 localise les vis par rapport au maillon 1 et à la semelle 29. Cette dernière comporte une embase métallique 29a recouverte par vulcanisation d'une couche d'un matériau synthétique 29b.

On voit sur cette figure que l'embase 29a comporte un téton central 42 dans lequel est aménagé un taraudage 43. La vis 44 est positionnée dans le trou 41, elle traverse aussi le trou 40 de l'autre demi-corps (non représenté sur la figure 11) et vient s'engager dans le taraudage 43 de l'embase 29a.

La figure 11 montre aussi deux vis 45 qui sont destinées à s'engager dans les taraudages portés par les tétons 37 du demi-corps 21a pour compléter l'assemblage comme décrit précédemment.

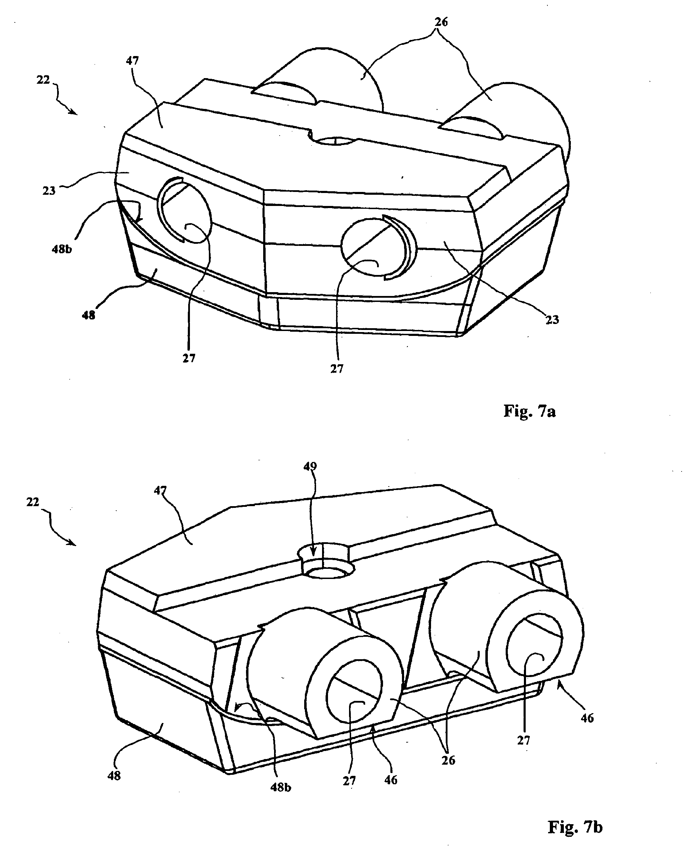

Les figures 7a et 7b montrent suivant deux orientations différentes un corps latéral 22 sans les axes 2. Celui ci comporte un socle monobloc ayant une forme comportant les profils plans 23 coopérant avec les formes hexagonales des corps centraux. Sur la face supérieure de ce socle est fixée une couche 47 de matériau élastique (caoutchouc). Comme cela a été décrit précédemment en référence à la figure 3a (zone B), cette couche constitue (avec les couches 35a et 35b du corps médian 21) le chemin de roulement pour un galet de guidage de la chenille.

Le socle du corps latéral 22 porte une semelle inférieure 48 qui est de forme différente mais de structure analogue à celle de la semelle 29. Elle comporte notamment une embase métallique sur laquelle est vulcanisée une couche de caoutchouc et qui porte un taraudage permettant montage et démontage de cette semelle pour permettre les remplacements de semelles usées.

L'embase métallique de la semelle 48 a, elle aussi, un profil incurvé 48b qui coopère avec un profil complémentaire du corps latéral 22 (voir figures 7a,7b). Une telle disposition permet d'empêcher la rotation de la semelle 48 par rapport au corps latéral 22 (et suivant l'axe de la vis de fixation de cette embase) et permet également une transmission des efforts longitudinaux de la semelle 48 au corps latéral 22.

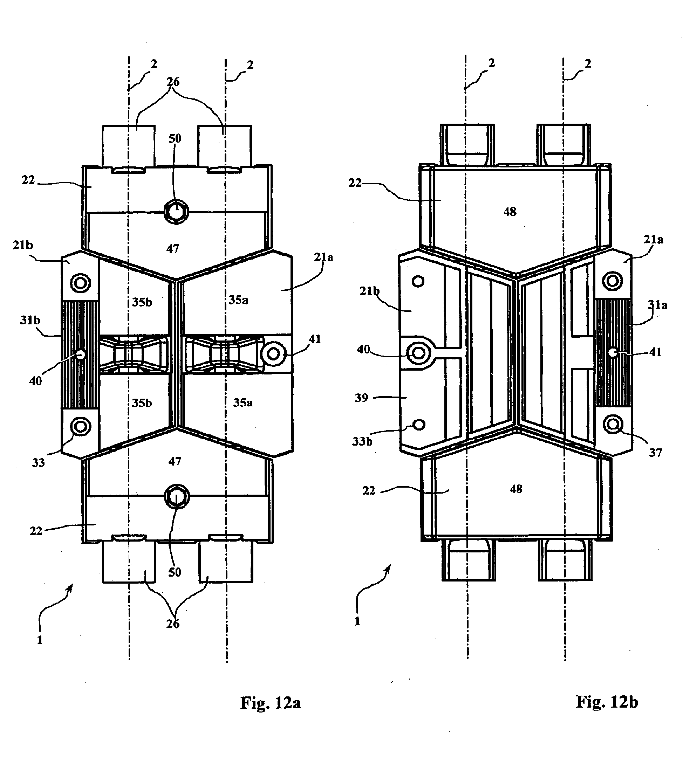

Une vis de fixation de la semelle traverse le corps latéral 22 au travers d'un alésage 49 pour se loger dans le taraudage de la semelle (vis non visible sur cette figure, la tête de cette vis 50 est visible à la figure 12a). L'alésage 49 passe sensiblement par le centre de gravité de la semelle 48 de façon à limiter les efforts reçus par la vis lors du fonctionnement.

On voit sur les figures 7a et 7b les tétons latéraux cylindriques 26 ainsi que leurs alésages 27 destinés à recevoir les axes 2 (par ajustement serré). Ces tétons 26 comportent un méplat 46 qui permet de réduire la masse.

On a déjà précisé que les phases les plus délicates du montage d'un maillon 1 étaient celles du montage des axes 2. En effet ces derniers sont liés au corps médian 21 par leurs couches d'adhérite 12 et solidaires des corps latéraux 22 par assemblage serré.

Toutes ces étapes sont réalisées en atelier et conduisent à la réalisation d'un maillon 1 selon l'invention qui est représenté aux figures 10a, 10b et 12a, 12b.

Un tel maillon est constitué par deux corps latéraux 22 et deux demi-corps médian 21a,21b. Chaque demi-corps médian 21a,21b est rendu solidaire des deux corps latéraux 22 par un axe 2 différent. Chaque demi-corps médian 21a ou 21b constitue ainsi la moitié d'un corps médian 21 différent.

On notera que les faces d'extrémités des axes 2 sont coplanaires avec les extrémités des tétons 26. Il en résulte un assemblage simplifié des axes et des corps latéraux 22, les calages en largeur des maillons 1 étant assurés par un simple appui des extrémités des tétons 26 sur un socle de référence lors du montage.

La précontrainte initiale de la chenille est maîtrisée lors de l'assemblage de chaque maillon. Il suffit de réaliser le sertissage des corps latéraux 22 sur les axes 2 avec l'angle voulu par rapport aux demi-corps médian 21a, 21b. Cet angle est donné en usine lors de l'assemblage de chaque maillon, il n'est donc plus nécessaire de réaliser une précontrainte préalable sur le terrain lors de l'assemblage des maillons les uns aux autres à l'aide de connecteurs. C'est en fait le simple vissage des demi-corps médian 21a et 21b d'un maillon par rapport à son voisin qui donnera la précontrainte.

Les maillons s'assemblent ainsi les uns aux autres de façon extrêmement simple par les deux vis 45 (figure 11) qui permettent de relier un demi-corps 21a porté par un maillon 1 à un demi-corps 21b porté par un autre maillon 1.

Après solidarisation de deux maillons 1 on fixe la semelle 29 qui complète le corps médian 21 obtenu par cet assemblage. Le démontage est tout aussi aisé.

Ces opérations peuvent être réalisées facilement et rapidement sur le terrain, sans outillage spécifique.

On notera que les vis d'assemblage 45 des demi-corps 21a et 21b sont protégées par la semelle 29 ce qui facilite leur démontage ultérieur.

Les semelles 29 sont fixées par une seule vis 44 qui se loge dans le trou 41 du demi-corps 21a (voir figure 6). Une fois deux maillons 1 assemblés cette vis est bien protégée aussi entre deux dents guide 5. On notera que la vis de fixation 44 de la semelle 29 traverse le corps médian 21 au travers d'un alésage qui passe sensiblement par le centre de gravité de la semelle 29. On limite ainsi les efforts reçus par cette vis lors du fonctionnement.

A titre de variante il sera possible de définir des moyens de liaison entre les demi-corps médian 21a et 21b de structure différente.

Il est également possible de réaliser une chenille dans laquelle les corps médians ne sont pas hexagonaux mais carrés ou rectangulaires. Cependant une telle solution, si elle facilite le montage/démontage et augmente aussi la surface de contact au sol, ne permettra pas d'obtenir la progressivité du passage des galets de roulement.

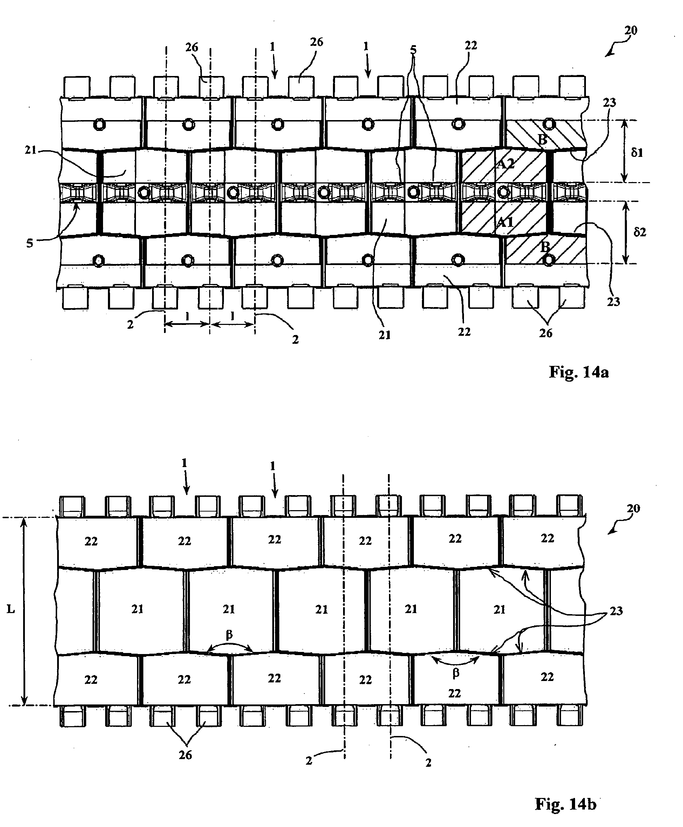

Les figures 14a, 14b, 15a, 15b et 16 montrent une chenille 20 suivant une variante de réalisation de l'invention. Cette variante diffère du mode de réalisation précédent uniquement par la forme des corps médians 21 ainsi que par celle des corps latéraux 22.

On remarque (en particulier sur la figure 14b) que, si les corps médians 22 sont toujours hexagonaux (quadrilatères ayant six côtés), les hexagones ne sont plus réguliers (les côtés et les angles ne sont plus tous égaux).

Ainsi Les côtés des hexagones des corps médians 21 qui sont en regard des profils 23 des corps latéraux forment un angle β qui est supérieur à 120° (l'angle correspondant à un hexagone régulier tel que représenté dans le mode de réalisation précédent). Cet angle P est ici égal à 170°. Comme on le voit sur la figure 14b, l'angle P est également l'angle entre les profils 23 de deux corps latéraux 22 voisins.

Une telle disposition permet d'assurer, tout comme la précédente, une continuité du roulement en adoucissant le transfert des efforts des galets de roulement à la chenille lors du passage d'un corps à l'autre. Le confort de roulage de la chenille est assuré et la surface de contact au sol reste maximale.

Tous les éléments constitutifs de la chenille sont par ailleurs identiques à ceux précédemment décrits et il n'est donc pas nécessaire de les décrire à nouveau. Cette variante comporte en particulier la même structure de réalisation du corps médian 21 en deux demi-corps 21a et 21b. La solidarisation d'un maillon avec un maillon voisin est assuré par les languettes 30a, 30b munies de dentures 31a et 31b portées par chaque demi-corps. Les dentures d'une languette coopèrent ainsi avec celles d'une autre languette après assemblage pour assurer une liaison en traction longitudinale des deux demi-corps 21a et 21b.

Des vis de fixation 45 assurent par ailleurs la solidarisation des deux demi-corps 21a et 21b et les demi-corps sont coiffés après assemblage par une semelle commune 29.
Les figures 14a et 14b sont ainsi analogues aux figures 3a et 3b décrites précédemment. On n'a pas reproduit la figure 3c qui serait identique avec cette variante de réalisation.

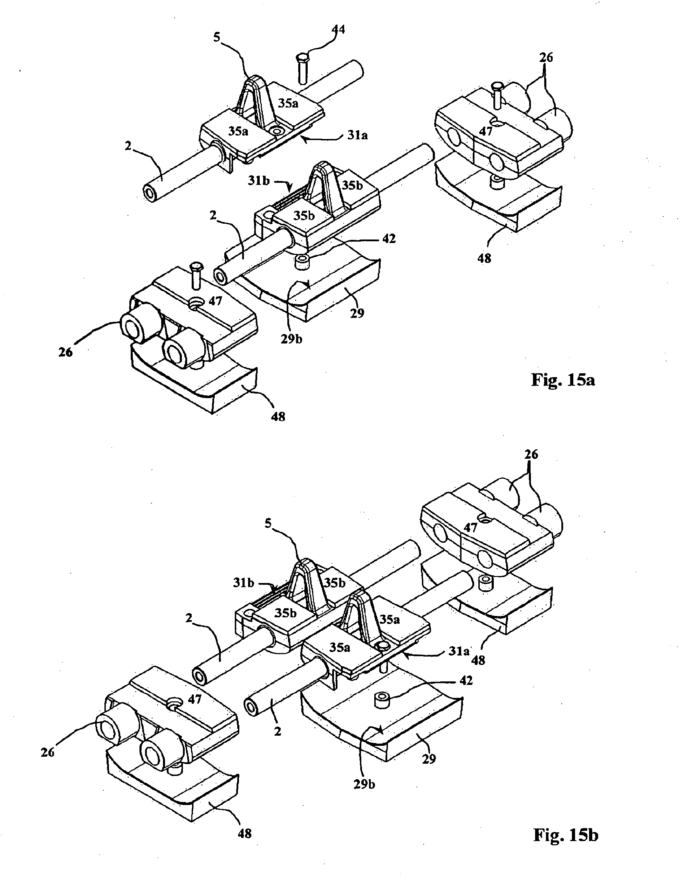

Les figures 15a et 15b montrent de façon éclatée l'assemblage des maillons de cette variante.
La figure 15a montre plus particulièrement,un pseudo maillon (comme le montrait la figure 4). La semelle 29 étant positionnée en dessous des deux demi-corps 21a et 21b qui seront assemblés l'un à l'autre par les dentures 31a et 31b.

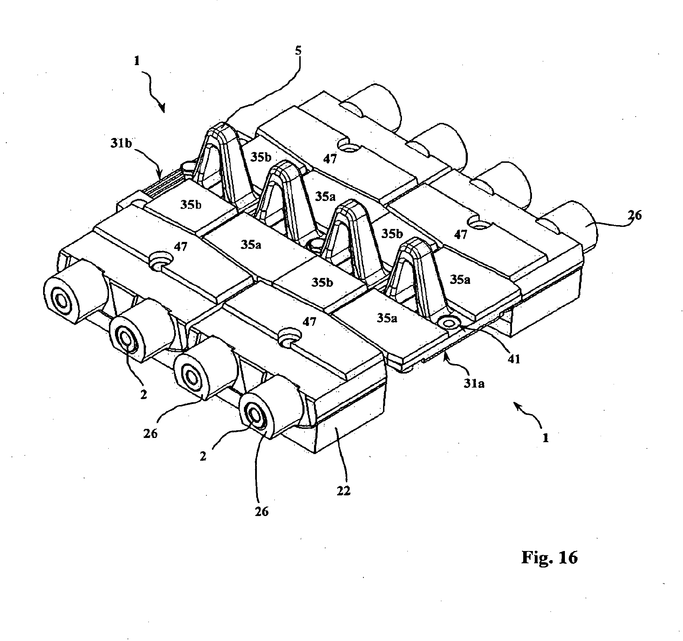

La figure 15b montre un maillon réel (comme le montraient les figures 10a et 10b). La figure 16 enfin montre en perspective deux maillons réels assemblés l'un à l'autre.

## Revendications

1. Chenille pour véhicule tout terrain, et notamment pour véhicule blindé, comprenant des maillons (1) articulés les uns aux autres de façon à former une chaîne fermée, chaque maillon portant au moins un corps (21, 22) doté d'une semelle (29, 48) destinée à venir en contact avec le sol, chenille comportant une rangée de corps médians (21) qui est disposée avec un décalage longitudinal par rapport aux rangées de corps latéraux (22), chaque corps médian (21) se trouvant ainsi placé en quinconce entre quatre corps latéraux (22), chaque corps médian (21) étant par ailleurs articulé, par l'intermédiaire d'au moins deux axes parallèles (2), avec quatre corps latéraux (22), c'est à dire deux corps latéraux au niveau de chaque rangée latérale, les axes (2) étant disposés à égale distance les uns des autres, chaque corps médian (21) étant formé de deux demi-corps (21a, 21b) qui sont assemblés l'un à l'autre par un moyen de liaison (45, 31a, 31b), **caractérisée en ce que** les deux demi-corps sont coiffés par une semelle commune (29), les deux demi-corps (21a, 21b) comportant chacun une languette (30a, 30b) munie de dentures (31a, 31b), les dentures d'une languette coopérant avec celles de l'autre languette après assemblage pour assurer une liaison en traction longitudinale des deux demi-corps (21a, 21b), des vis de fixation (45) assurant par ailleurs la solidarisation des deux demi-corps (21a, 21b).

2. Chenille selon la revendication 1, **caractérisée en ce que** les corps médians (21) ont une forme globalement hexagonale, les corps latéraux (22) ayant des profils (23) correspondant avec ceux des corps médians (21) en regard desquels ils se positionnent.

3. Chenille selon la revendication 2, **caractérisée en ce que** les corps médians (21) ont une forme d'hexagone régulier.

4. Chenille selon la revendication 2, **caractérisée en ce que** les corps médians (21) ont une forme d'hexagone non régulier, les profils (23) de deux corps latéraux (22) voisins formant un angle supérieur à 120°.

5. Chenille selon les revendication 4, **caractérisée en ce que** chaque demi-corps (21a, 21b) porte une dent guide médiane (5) solidaire de la face opposée à celle destinée à recevoir la semelle (29).

6. Chenille selon une des revendications 1 à 5, **caractérisée en ce que** chaque corps médian (21) est articulé avec les corps latéraux (22) par l'intermédiaire de deux axes parallèles (2), chaque axe comportant une partie médiane couverte d'au moins une couche (12) d'un matériau élastique et qui est solidaire du corps médian (21).

7. Chenille selon la revendication 6, **caractérisée en ce que** l'extrémité de chaque axe (2) est rendue solidaire d'un corps latéral (22) par encastrement.

8. Chenille selon une des revendications 1 à 7, **caractérisée en ce que** chaque maillon (1) de la chenille est constitué par deux corps latéraux (22) et deux demi-corps médian (21a, 21b), chaque demi-corps médian étant rendu solidaire des deux corps latéraux (22) par un axe (2) différent, chaque demi-corps médian (21a, 21b) constituant la moitié d'un corps médian (21) différent.

## Patentansprüche

1. Gleiskette für ein Geländefahrzeug, und insbesondere für ein gepanzertes Fahrzeug, umfassend Kettenglieder (1), welche so miteinander gelenkig verbunden sind, dass sie eine geschlossene Kette bilden, wobei jedes Kettenglied mindestens einen Körper (21, 22) trägt, welcher mit einer Fußplatte (29, 48) versehen ist, die dafür vorgesehen ist, um mit dem Boden in Kontakt zu kommen, wobei die Gleiskette eine Reihe von mittleren Körpern (21) aufweist, welche mit einem longitudinalen Versatz in Bezug auf die Reihen von seitlichen Körpern (22) angeordnet ist, wobei jeder mittlerer Körper (21) dadurch in Fünferanordnung zwischen vier seitlichen Körpern (22) angeordnet ist, wobei jeder mittlerer Körper (21) außerdem mit Hilfe mindestens zweier paralleler Achsen (2) mit vier seitlichen Körpern (22), das heißt zwei seitliche Körper im Bereich jeder seitlichen Reihe, gelenkig verbunden ist, wobei die Achsen (2) in gleichem Abstand zueinander angeordnet sind, wobei jeder mittlerer Körper (21) von zwei Halbkörpern (21a, 21b) gebildet wird, welche mittels eines Verbindungsmittels (45, 31a, 31b) miteinander zusammengesetzt werden, **dadurch *gekennzeichnet, dass*** die beiden Halbkörper mit einer gemeinsamen Fußplatte (29) bedeckt sind, wobei die beiden Halbkörper (21a, 21b) jeweils einen Steg (30a, 30b) umfassen, welcher mit Verzahnungen (31a, 31b) versehen ist, wobei nach Zusammensetzung die Verzahnungen eines Stegs mit denen des anderen Stegs zusammenwirken, um eine Verbindung in longitudinaler Zugbeanspruchung der beiden Halbkörper (21a, 21b) zu gewährleisten, wobei Befestigungsschrauben (45) außerdem den Zusammenhalt der beiden Halbkörper (21a, 21b) gewährleisten.

2. Gleiskette nach Anspruch 1, **dadurch gekennzeichnet, dass** die mittleren Körper (21) eine im Großen und Ganzen hexagonale Form besitzen, wobei die seitlichen Körper (22) Profile (23) besitzen, welche mit denjenigen der mittleren Körper (21) korrespondieren, denen sie gegenüber liegen.

3. Gleiskette nach Anspruch 2, **dadurch gekennzeichnet, dass** die mittleren Körper (21) eine gleichmäßige, hexagonale Form aufweisen.

4. Gleiskette nach Anspruch 2, **dadurch gekennzeichnet, dass** die mittleren Körper (21) eine ungleichmäßige, hexagonale Form aufweisen, wobei die Profile (23) zweier benachbarter seitlicher Körper (22) einen Winkel von größer als 120° bilden.

5. Gleiskette nach Anspruch 4, **dadurch gekennzeichnet, dass** jeder Halbkörper (21a, 21b) einen mittleren Führungszahn (5) trägt, welcher fest mit der Fläche verbunden ist, welche jener gegenüber liegt, die dafür vorgesehen ist, die Fußplatte (29) aufzunehmen.

6. Gleiskette nach einem der Ansprüche 1 bis 5, **dadurch gekennzeichnet, dass** jeder mittlerer Körper (21) mit Hilfe zweier paralleler Achsen (2) mit den seitlichen Körpern (22) gelenkig verbunden ist, wobei jede Achse einen mittleren Abschnitt umfasst, welcher mit mindestens einer Schicht (12) aus einem elastischen Material überzogen ist, und fest mit dem mittleren Körper (21) verbunden ist.

7. Gleiskette nach Anspruch 6, **dadurch gekennzeichnet, dass** das Ende von jeder Achse (2) durch Einfalzung fest mit einem seitlichen Körper (22) verbunden ist.

8. Gleiskette nach einem der Ansprüche 1 bis 7, **dadurch gekennzeichnet, dass** jedes Kettenglied (1) der Gleiskette von zwei seitlichen Körpern (22) und zwei mittleren Halbkörpern (21a, 21b) gebildet wird, wobei jeder mittlerer Halbkörper über eine unterschiedliche Achse (2) mit den zwei seitlichen Körpern (22) fest verbunden ist, wobei jeder mittlerer Halbkörper (21a, 21b) die Hälfte eines anderen mittleren Körpers (21) darstellt.

## Claims

1. A track for an all-terrain vehicle, and namely for an armoured vehicle, comprising links (1) hinged together so as to form a closed chain, each link carrying at least one body (21, 22) equipped with a track shoe (29, 48) intended to come into contact with the ground, track incorporating a row of median bodies (21) that is arranged so as to be longitudinally offset with respect to the row of lateral bodies (22), each median body (21) being thus positioned staggered between four lateral bodies (22), each median body (21) being further hinged, by means of at least two parallel pins (2), to four lateral bodies (22), that is to say two lateral bodies from each lateral row, the pins (2) being positioned at an equal distance from one another, each median body (21) is formed of two half-bodies (21a, 21b) assembled together by linking means (45, 31a, 31b), **characterised in that** the two half-bodies are capped by the same track shoe (29), the two half-bodies (21a, 21b) each incorporates a tongue (30a, 30b) equipped with toothing (31a, 31b), the toothing of one tongue cooperating with that of another after assembly to ensure a link in longitudinal traction of the two half-bodies (21a, 21b), fastening screws (45) further ensuring the joining of the two half-bodies (21a, 21b).

2. A track according to Claim 1, **characterised in that** the median bodies (21) are globally hexagonal in shape, the lateral bodies (22) having profiles (23) corresponding to those of the median bodies (21) opposite which they are positioned.

3. A track according to Claim 2, **characterised in that** the median bodies (21) are of a regular hexagonal shape.

4. A track according to Claim 2, **characterised in that** the median bodies (21) are of an uneven hexagonal shape, the profiles of two adjacent lateral bodies (22) in this case forming an angle of over 120°.

5. A track according to Claims 5 or 6, **characterised in that** each half-body (21a, 21b) carries a median guide tooth (5) integral with the face opposing that intended to receive the track shoe (29).

6. A track according to one of Claims 1 to 5, **characterised in that** each median body (21) is hinged with the lateral bodies (22) by means of two parallel pins (2), each pin incorporating a median part covered by at least one layer (12) of an elastic material and which is integral with the median body (21).

7. A track according to Claim 6, **characterised in that** the end of each pin (2) is made integral with a lateral body (22) by recessed fitting.

8. A track according to one of Claims 1 to 7, **characterised in that** each link (1) of the track is constituted by two lateral bodies (22) and two median half-bodies (21a, 21b), each median half-body being made integral with the two lateral bodies (22) by a different pin (2), each median half-body (21a, 21b) constituting half of a different median body (21).
